(19) Europäisches Patentamt
European Patent Office
Office européen des brevets

(11) Publication number: **0 379 076 A2**

(12) # EUROPEAN PATENT APPLICATION

(21) Application number: **90100582.7**

(22) Date of filing: **12.01.90**

(51) Int. Cl.[5]: **C08F 2/24, C09D 157/00, C25D 13/06**

(30) Priority: **17.01.89 US 297733**

(43) Date of publication of application: **25.07.90 Bulletin 90/30**

(84) Designated Contracting States: **AT BE DE DK ES FR GB IT NL SE**

(71) Applicant: **PPG INDUSTRIES, INC.**
**One PPG Place**
**Pittsburgh Pennsylvania 15272(US)**

(72) Inventor: **Bodwell, James Robert**
**806 Edward Lane**
**West Chester, Pa. 19382(US)**
Inventor: **Tetenbaum, Marvin Theodore**
**2919 Salisbury Court**
**Wexford, Pa 15090(US)**
Inventor: **Kapp, David Charles**
**700 Westwood Drive**
**Gibsonia, Pa 15044(US)**
Inventor: **Maska, Rudolf**
**117 Hodil Terrace**
**Pittsburgh, Pa. 15238(US)**

(74) Representative: **Hann, Michael, Dr. et al**
**Patentanwälte Dr. Michael Hann Dr. H.-G. Sternagel Sander Aue 30**
**D-5060 Bergisch Gladbach 2(DE)**

(54) **Use of mixed polymeric surfactants for improved properties.**

(57) Disclosed herein is latex copolymer which is prepared with polymeric surfactants comprising a base-neutralized, acid functional addition polymer and a base-neutralized phosphated epoxy polymer.

EP 0 379 076 A2

Xerox Copy Centre

# USE OF MIXED POLYMERIC SURFACTANTS FOR IMPROVED PROPERTIES

## Background of the Invention

Field of the Invention: The present invention relates to emulsion polymers, particularly emulsion polymers which are substantially free of external surfactants. More specifically, the present invention relates to improved emulsion polymers which are prepared by free-radical initiated addition polymerization of ethylenically unsaturated monomers in the presence of a polymeric surfactant.

## Brief Description of the Prior Art

Emulsion polymers which are prepared in the presence of polymeric surfactants and their use in coatings are known in the art.

While coatings prepared with emulsion addition polymers can have a high degree of adhesion as well as film hardness, they have an antecedent flow problem during the coating process. In many instances, an attempt to improve flow compromises other desirable film properties such as hardness and flexibility. In the present invention, there are provided emulsions and coatings that have the desired film properties as well as application properties.

## Summary of the Invention

In accordance with the foregoing, the present invention encompasses an improved latex polymer which is prepared by a free-radical initiated addition polymerization of an ethylenically unsaturated monomer, in water in the presence of a surfactant, the improvement comprising the surfactant which comprises a base-neutralized phosphated epoxy polymer and a base-neutralized acid functional addition polymer in an amount sufficient to provide a water-dispersed phase of the ethylenically unsaturated monomers.

The invention further encompasses an improved process for making a high Tg latex polymer with improved flow and adhesion, comprising free radical-initiated addition polymerization of an ethylenically unsaturated monomer in the presence of a surfactant, the improvement comprising the surfactant which comprises a (i) a base-neutralized phosphated epoxy polymer and (ii) a base-neutralized acid functional addition polymer.

Also, the invention encompasses a coating composition including an electrocoating composition having good flow properties, good flexibility, and hardness.

## Detailed Description of the Invention

The base-neutralized phosphated epoxy polymers useful herein are polymers containing epoxy-phosphoric acid adduct having at least one hydroxyl group which is linked to a phosphorus atom. The phosphated epoxy polymers useful herein are prepared by reacting a polyepoxide resin with phosphoric acid or an equivalent thereof. The resulting phosphated epoxy polymer is neutralized with a base, such as an amine, in order to form the base neutralized phosphated epoxy polymer.

The polyepoxide resin useful herein is a compound or a mixture of compounds having more than 1.0 epoxy groups per molecule. Several polyepoxide resins are known, examples of which can be found in the HANDBOOK OF EPOXY RESINS, Lee and Neville, 1967, McGraw-Hill Book Company.

A preferred class of polyepoxides are the polyglycidyl ethers of polyphenols, such as bisphenol A. They are produced by etherification of a phenolic compound with epichlorohydrin in the presence of an alkali. The phenolic compound can be 1,1-bis(4-hydroxyphenyl)ethane; 1,1-bis(4-hydroxyphenyl)isobutane; 2,2-bis(4-hydroxytertiarybutylphenyl)propane; bis(2-hydroxynaphthyl)methane; 1,5-dihydroxynaphthalene; and 1,1-bis(4-hydroxy-3-allylphenyl)ethane. Another quite useful class of polyepoxides are produced similarly from polyphenol resins.

Also suitable are similar polyglycidyl ethers of polyhydric alcohols which are derived from such polyhydric alcohols as ethylene glycol, diethylene glycol, 1,5-pentanediol, 1,2,6-hexanetriol, glycerol, and 2,2-bis(4-hydroxycyclohexyl)propane.

Another useful class of polyepoxides are those containing oxyalkylene groups in the epoxy molecule. Such oxyalkylene groups are typically groups of the general formula:

$$-\ O\left[\ [CH_2 - \underset{R}{\overset{H}{\underset{|}{\overset{|}{C}}}}]_m\ \right]_n$$

wherein R is hydrogen or alkyl, preferably lower alkyl (e.g., having 1 to 6 carbon atoms) and where, in most instances, m is 1 to 4 and n is 2 to 50. Such groups can be pendent to the main molecular chain of the polyepoxide or part of the main chain itself. The proportion of oxyalkylene groups in the polyepoxide depends upon many factors, including the chain length of the oxyalkylene group, the nature of the epoxy and the degree of modification desired.

In addition to the polyepoxide resins described above, addition polymerization polymers containing pendent epoxy groups can also be utilized in this invention. Such polymers are made by copolymerizing a wide variety of polymerizable vinyl monomers including monomers such as glycidyl acrylate and glycidyl methacrylate. Suitable vinyl monomers include those which do not contain a group reactive with the epoxy group and preferably include the alpha, beta-ethylenically unsaturated carboxylic acid esters of saturated alcohols, preferably containing from 1 to 8 carbon atoms and the monovinyl aromatic monomers of the benzene class, e.g., styrene and vinyl toluene.

Hydantoin-based polyepoxide resins as described in U.S. Patent 4,110,287, issued August 29, 1978 to Bosso and Castellucci, and in an article in Die Angewandte Makromolekulare Chemie, by Jurgen Habermeier, Vol. 63, (1977), pages 63 to 104 (the disclosures of which are hereby incorporated by reference), can also be used. The preferred polyepoxide resin has an epoxy equivalent of about 170 to 5000 and preferably 180 to 500.

As indicated above, the polyepoxide resin is reacted with a phosphoric acid. The phosphoric acid can be a 100 percent orthophosphoric acid, superphosphoric acid or the aqueous solutions thereof such as 85 percent phosphoric acid aqueous solution. Other forms of the phosphoric acid and triphosphoric acid can be used. Also, the polymeric or partial anhydrides of the phosphoric acids can be used.

Typically, useful herein are aqueous phosphoric acids which are of about 70 to 90 percent and preferably about 85 percent phosphoric acid. The ratio of reactants is about 0.1 to 1 mole and preferably 0.1 to 0.5 mole of phosphoric acid per an equivalent of an epoxy group.

A solvent or mixture of solvents is preferably employed in the reaction of the epoxy resin and phosphoric acid for the purpose of achieving better reaction control. A non-reactive solvent can be used; examples of which include the ketones, ethers, alcohols, and ether alcohols. Specific examples of suitable solvents are methyl ethyl ketone, methyl butyl ketone, ethanol, propanol, isopropanol, butanol, butoxyethanol and diethylene glycol monobutyl ether.

In accordance with the invention, the resultant phosphated epoxy polymer is at least partially neutralized with a base which is preferably a fugitive base. Suitable bases include ammonia and primary, secondary or tertiary amines, e.g., ethanolamine, diethanolamine, N-methylethanolamine, N,N-dimethylethanolamine; isopropanolamine, diisopropanolamine, methylamine, ethylamine, diethylamine, trimethylamine, triethylamine and morpholine. Preferably, the resultant phosphated epoxy polymer is substantially free of an epoxy group and is ungelled. It has a molecular weight of 600 to 21,000.

The acid-functional addition polymers useful herein are prepared by free radical-initiated addition polymerization of ethylenically unsaturated monomers, at least one of which contains an acid group, in a solvent medium. The resultant acid-functional addition polymer is neutralized with a base, such as an amine, in order to form the base-neutralized acid-functional addition polymer.

The acid-functional monomers useful herein are preferably alpha, beta-ethylenically unsaturated carboxylic acids. The acid-functional monomer is copolymerized with other monomers as described hereinbelow. Examples of suitable alpha, beta-ethylenically unsaturated carboxylic acids are those containing from 3 to 8 carbon atoms such as acrylic acid, methacrylic acid, itaconic acid, maleic acid, fumaric acid, mono-esters of unsaturated dicarboxylic acids, e.g., monomethyl maleate and monoethyl fumarate as well as anhydrides of the corresponding acids where they exist, can also be used. Acrylic and methacrylic acids are preferred.

Other acid-functional monomers, such as sulfonic acids, e.g., sulfoethyl methacrylate, 2-acrylamido 2-methylpropane sulfonic acid, may be useful herein.

The polymerizable monomer is selected from a wide variety of materials depending upon the properties desired. For example, at least a portion of the other copolymerizable monomer can be vinyl compound such as ethylene or propylene, a vinyl aromatic compound such as styrene, tertiary butylstyrene, vinyltoluene and vinylxylene. Such monomers are preferred because of their good water and pasteurization resistance. Other monomers which are useful herein as the alkyl esters of methacrylic acid which contain from 1 to 3 carbon atoms in the alkyl group. Specific examples of such esters are methyl methacrylate and ethyl methacrylate. Monomers which can be used and which provide flexibility to the coating are the alkyl esters of acrylic acid having from 2 to 12 carbon atoms in the alkyl group and alkyl esters of methacrylic acid having from 4 to 12 carbon atoms in the alkyl group. Examples of monomers of this type are ethyl acrylate, propyl acrylate, butyl acrylate, hexyl acrylate, 2-ethylhexyl acrylate, butyl methacrylate, and 2-ethylhexyl methacrylate. Yet, other monomers which can be useful herein are copolymerizable monomers containing an epoxy group. Examples thereof can be glycidyl acrylate, glycidyl methacrylate, allyl glycidyl ether and the like.

Also useful herein can be ethylenically unsaturated monomer containing N-(alkoxyalkyl)amides. Examples thereof are N-(alkoxymethyl)acrylamides and N-(alkoxymethyl)methacrylamides having 1 to 4 carbon atoms in the alkoxy group. N-methylolacrylamide and N-(methylol)methacrylamide can also be used.

Still, other monomers include the vinyl halides, vinylidene halides, vinyl versatate, vinyl acetate, dialkyl fumarate, dialkyl maleate, allyl chloride, allyl alcohol, 1,3-butadiene, 2-chlorobutene, methyl vinyl ether, acrylamide, methacrylamide, acrylonitrile, and methacrylonitrile. Mixtures of any of the above-described vinyl monomers can be used.

The acid-functional addition polymer described above is typically water-based. It can be prepared by free-radical initiated polymerization of a mixture of the copolymerizable monomers by solution polymerization techniques. Usually, the monomers are dissolved in a solvent or a mixture of solvents and polymerized until the free monomeric content is reduced to below about 0.5 percent, preferably below about 0.1 percent. Examples of free radical initiators include azobis(alpha-gamma)-dimethylvaleronitrile, tertiary-butyl perbenzoate, tertiary-butyl peracetate and benzoyl peroxide.

Solvents which can be used in the polymerization step include alcohols such as ethanol, n-butanol, tertiary butanol, tertiary amyl alcohol; ketones such as acetone, methyl ethyl ketone; and ethers such as the dimethyl ether of ethylene glycol. Usually, the solvent is first heated to reflux and a mixture of the monomers and the free radical initiator are added simultaneously and slowly to the refluxing solvent. An additional catalyst is optionally added and the reaction mixture is held at polymerizing temperatures so as to reduce the free monomer content of the reaction mixture.

Other acid group-containing polymers, preferably having acid values of about 20 to 750 which are compatible with the phosphated epoxy resin, for use in accordance with this invention are also encompassed hereby.

In the present embodiments of the invention, the resultant acid-functional addition polymer is neutralized at least partially with a base which is preferably a fugitive base. Suitable bases include ammonia and primary, secondary or tertiary amines, e.g., ethanolamine, diethanolamine, N-methylethanolamine, N,N-dimethylethanolamine, methylamine, ethylamine, diethylamine, trimethylamine, triethylamine and morpholine. The acid-functional addition polymers useful herein are of weight average molecular weight of 5,000 to 100,000 and preferably 10,000 to 50,000.

The Latex Polymer: using the afore-described base-neutralized epoxy polymer and the addition polymer as a polymeric surfactant, one can prepare the improved latex polymer of the invention by polymerizing an ethylenically unsaturated monomer in water in the presence of the surfactant. The polymeric surfactant herein is employed in an amount sufficient to provide a water dispersed phase of the ethylenically unsaturated polymerizable monomer. Amounts ranging from about 10 to 90 percent and preferably about 25 to 75 and more preferably about 40 to 60 percent polymeric surfactant based on the total solids of the latex compolymer can be employed. Of the total polymeric surfactants employed herein, from about 25 to 95 percent and preferably 25 to 40 percent thereof is the base-neutralized phosphated epoxy.

In the present embodiment of the invention, the polymerizable monomer is a styrene. In some embodiments of the invention, it is preferred to employ therewith epoxy group-containing ethylenically unsaturated polymerizable monomers such as glycidyl acrylate, glycidyl methacrylate, allyl glycidyl ether or the like. Generally put, the selection of the polymerizable monomer, for the latex formation, will depend primarily on the end use of the resultant latex. Other polymerizable ethylenically unsaturated monomers useful herein can be essentially the same as the copolymerizable monomers employed in the preparation of the addition polymers described hereinabove. It is a distinct feature of the invention that even at high glass

transition temperature (Tg) of say from about 45 to 150 °C, the latex copolymers of this invention exhibit remarkably good flow.

Free radical initiators that can be used in the preparation of the latex copolymer can be VAZO initiators, such as VAZOs from Dupont Chemical Company, or other oil-based initiators such as benzoyl peroxide; water-soluble initiators such as peroxide-types, e.g., hydrogen peroxide; ionic types, e.g., ammonium, sodium or potassium persulfates. Typically, there are employed amounts of 0.01 to 3 percent and preferably 0.05 to 1 percent of the initiator based on the weight of the copolymerizable monomers.

Examples of the radical-initiated polymerization techniques that are employed herein can be continuous, semi-continuous, pre-emulsification, and seeding techniques. The resultant latex copolymer of this invention is stable, clean and has a solids content of 20 to 50 and preferably 25 to 40.

In the practice of this invention as a coating composition, the latex polymer and a curing agent such as an aminoplast or phenoplast resin or an isocyanate including blocked isocyanates can be employed in amounts sufficient to cure the coating composition. Generally, the latex copolymer is employed in amounts of about 5 to 50 percent by weight, and preferably about 15 to 25 percent by weight based on total resin solids of the coating composition. The aminoplast or phenoplast is employed in amounts of about 5 to 65 percent and preferably about 10 to 15 percent by weight based on the total resin solids of the composition.

Aminoplast resins are the condensation products of an aldehyde, e.g., formaldehyde, acetaldehyde, crotonaldehyde, and benzaldehyde with an amino- or amide group-containing substance, e.g., urea, melamine, and benzoguanamine. Products obtained from the reaction of alcohols and formaldehydes with melamine, urea or benzoguanamine are preferred in the aqueous-based coating compositions because of their good water dispersibility. Useful alcohols used to make the etherified products are the monohydric alcohols, such as methanol, ethanol, propanol, butanol, hexanol, benzyl alcohol, cyclohexanol, and ethoxyethanol. An etherified melamine-formaldehyde resin is the preferred aminoplast resin. U.S. Patent 4,075,141, Porter et al, February 21, 1978, contains a description of useful aminoplast resins and is incorporated herein by reference.

Phenolic resins include the condensation product of an aldehyde with a phenol. Formaldehyde and acetaldehyde are preferred aldehydes. Various phenols can be used, e.g., phenol per se, cresol, p-phenylphenol, p-tert-butylphenol, p-tert-amylphenol and cyclopentylphenol. The methylolphenol ethers described in U.S. Patent 2,597,330 (herein incorporated by reference) are especially useful.

A number of blocked polyisocyanates are satisfactory crosslinking agents. These agents are well known in the art. Generally, the organic polyisocyanates are blocked with a volatile alcohol, epsiloncaprolactam or ketoxime. These blocked polyisocyanates become unblocked at elevated temperatures, e.g., above about 100 °C. "The Chemistry of Organic Film Formers", Robert E. Kreiger Pub. Co., copyrighted 1977, by D. H. Solomon, pages 216 to 217, contains a description of many blocked isocyanates that can be used here (the disclosure of this publication is herein incorporated by reference).

Also contained in the coating composition can be additives such as pigments, flow control agents, adhesion promoters, cure catalysts and the like. The coating compositions of this invention can be prepared by thoroughly blending the latex polymer, the curing agent, and other coating additives. Typically, resinous adjuncts such as polyester polyols, polyether polyols, alkyds and functional acrylic polymers are employed therewith. The resinous adjuncts are selected on the basis of cost and properties such as flow, viscosity and the like. It is a distinct feature of the invention that the latex polymers of this invention, in their own right, provide improvement in flow properties and exhibit good adhesion properties. Nonetheless, the latex polymers can be used with flow control agents such as polyesters, e.g., KELSOL 529-B-75, available from Spencer Kellog Co., adhesion promoters such as epoxy resins, e.g., EPON 828, available from Shell Chemical Co., and the like, which are employed in coating applications. These and other additives are within the purview of one skilled in the art.

The coating composition can be applied directly to substrates such as aluminum, steel or the like by means such as direct or reverse roll coating. The coating has remarkably good flow and exhibits this property particularly in direct-roll coating. The coated substrates are cured by, say, baking to a temperature sufficient to effect such a cure. Typically, the coated substrates are baked at peak metal temperatures of about 350 °F (177 °C) to 400 °F (204 °C) to provide hard films.

The cured coatings are drawable and pasteurizable after they have been drawn. Drawability which is a measure of fabricating property is measured by the first stage screw-cap method which is as follows. Using a force of about 15 tons, flat nosed cups of about 2.7 centimeters diameter are deep drawn to about 0.9 centimeters rise on a Swift cupping press starting from various blanks of aluminum panels coated directly with the compositions of this invention or coated over inks. Good drawability is exhibited when there is no cracking and/or loss of adhesion of the coating on the side of the cap, upon visual inspection.

The cured coatings have good film integrity in that they have good pencil hardness, and good solvent

resistance which can be evaluated by methyl ethyl ketone double-rubs with a cloth which has been wet with methyl ethyl ketone and used to rub across the surface of the cured coating until the integrity of the film is affected.

These and other aspects of the invention are further illustrated by the following non-limiting examples.

## Example A

An acrylic surfactant useful herein was prepared as follows:

| Ingredient | Parts by Weight (grams) |
|---|---|
| **Reactor Charge** | |
| Butanol | 100.0 |
| Bisphenol A-polyol[1] | 475.2 |
| **Charge X** | |
| t-Butyl perbenzoate | 47.5 |
| Butanol | 180.0 |
| **Charge A** | |
| Styrene | 819.7 |
| Acrylic acid | 356.4 |
| Ethyl acrylate | 11.9 |
| Butanol | 300.0 |
| **Charge B** | |
| Deionized water | 100.0 |
| **Charge C** | |
| Deionized water | 250.0 |
| Ammonium hydroxide | 120.2 |

(1) The reaction product of one mole of bisphenol A with seven moles of ethylene oxide.

| | |
|---|---|
| **Charge D** | |
| Deionized water | 5500 |

In a properly equipped reaction vessel and under a nitrogen blanket, the reactor charge was heated to reflux. Charges A and X were added over three hours over a temperature range of about 120° C to 136° C. The resulting reaction mixture was held at 120° C for one hour. Charge B was added slowly to the reaction mixture over a period of 20 minutes. Charge C was then added to the reaction mixture over a period of 30 minutes. Charge D was preheated to about 75° C and added to the reaction mixture over a temperature range of 63° C to 72° C for 1-1/2 hours. The final reaction product comprising the acrylic surfactant was then allowed to cool to about 56° C.

Analysis: Percent solids (110° C for two hours) was 20.2, milliequivalents of acid was 0.522, milliequivalents of base was 0.244, Brookfield viscosity was 130 centipoises (No. 3 at 20 rpm), weight average molecular weight was 90,689.

## Example B

A phosphated epoxy surfactant, useful herein, was prepared as follows:

| Ingredients | Parts by Weight (grams) |
|---|---|
| Charge I | |
| Phosphoric acid (85%) | 524.3 |
| Charge II | |
| Epon 828[1]<br>Butyl cellosolve | 2578.5<br>1105.1 |
| Charge III | |
| Deionized water | 491.6 |
| Charge IV | |
| Ammonium hydroxide (28%) | 636.3 |
| Charge V | |
| Deionized water | 2664.3 |

(1) An epoxy resin having an epoxy equivalent of 189; it is available from Shell Chemical Company.

In a properly equipped reaction vessel and under a nitrogen blanket, Charge I was heated to 110° C. Charge II was added thereto over two hours and over a temperature range of 115° C to 134° C; the resultant mixture was held for 30 minutes. Charge III was then added over 10 minutes and over a temperature range of 123° C to 106° C; the resulting mixture was held for two hours. The resultant mixture was cooled to 27° C and Charge IV was slowly added. There was a resulting exotherm with a temperature rise to 63° C; and the reaction mixture was held for 15 minutes at 63° C. Charge V was then added to reaction mixture over a period of 40 minutes. The final product comprising the phosphated epoxy soap stirred until it cooled down to room temperature.

Analysis: Gardner-Holdt viscosity measured at 25° C was 0+, pH was 9.34, percent solids (150° C) was 41.8, milliequivalents of acid was 1.123 and milliequivalents of amine was 1.340.

## Example 1

The acrylic latex of this invention was prepared as follows:

| Reactor Charge | |
|---|---|
| Ingredient | Parts by Weight (grams) |
| Deionized Water<br>Acrylic surfactant of Example A<br>Phosphated epoxy surfactant of Example B<br>Triton N-101[1] | 425.6<br>2562.2<br>657.2<br>13.5 |
| Charge 1 | |
| VAZO 67[2]<br>Methyl ethyl ketone | 30.0<br>16.5 |
| Charge 2 | |
| Styrene | 675.0 |

(1) A nonionic surfactant which is an ethoxylated nonylphenol; it is available from Rohm and Haas.
(2) Azobis-2,2′-(2-methylbutyronitrile) available from DuPont Company.

In a properly equipped reaction vessel and under a nitrogen blanket, the reactor charge was heated to 70° C and Charge 1 was added and the reaction mixture was held for 1/2 hour. Charge 2 was then added over two hours at 70° C. The reaction was held for two hours at 70° C.

Analysis: Viscosity was 550 centipoises. Milliequivalents of acid was .505 and millequivalents of base was 0.311. Molecular weight: Mn was 3,132 and Mw was 816,606.

Coating composition of the latex polymer of Example 1 applied to panels of an aluminum substrate by direct roll coating exhibited good flow and adhesion properties. The applied coatings were baked at 400° F to 450° F for 90 seconds to 3 minutes to produce hard and flexible cured coatings.

## Example 2

This example further illustrates the acrylic latex of this invention.

| Initial Charge | |
|---|---|
| Ingredients | Parts by Weight (grams) |
| DI water<br>Acrylic surfactant of Example A<br>Phosphated epoxy of Example B<br>Triton N-101 | 17.9<br>1383.4<br>79.0<br>5.4 |
| Addition 1 | |
| Ingredients | Parts by Weight (grams) |
| VAZO-67<br>Methyl ethyl ketone | 12.0<br>6.6 |
| Addition 2 | |
| Ingredients | Parts by Weight (grams) |
| Styrene | 270.0 |

The reaction was run in essentially the same manner as described in Example 1 except that a four-hour hold was used instead of a two-hour hold.

Analysis: Viscosity was 830 centipoises. Milliequivalents of acid was .488 and milliequivalents of base was .186. Molecular weight: (Mn) was 4320 and (Mw) was 148165. The particle size was 2650 angstroms.

## Example 3

This example further illustrates the acrylic latex of this invention.

| Initial Charge | |
|---|---|
| Ingredients | Parts by Weight (grams) |
| DI water<br>Acrylic surfactant of Example A<br>Phosphated epoxy of Example B<br>Triton N-101 | 541.9<br>307.9<br>631.0<br>5.4 |
| Addition 1 | |
| Ingredients | Parts by Weight (grams) |
| VAZO-67<br>Methyl ethyl ketone | 12.0<br>6.6 |
| Addition 2 | |
| Ingredients | Parts by Weight (grams) |
| Styrene | 270.0 |

The reaction was run in essentially the same manner as described in Example 1 except that a four-hour hold was used instead of a two-hour hold.

Analysis: Viscosity was 130 centipoises. Milliequivalents of acid was .511 and milliequivalents of base was .230. Molecular weight: (Mn) was 2737 and (Mw) was 124262. The particle size was 5930 angstroms.

## Example 4

This example further illustrates the acrylic latex of this invention.

| Initial Charge | |
|---|---|
| Ingredients | Parts by Weight (grams) |
| DI water<br>Acrylic surfactant of Example A<br>Phosphated epoxy of Example B<br>Triton N-101 | 1004.2<br>186.2<br>46.7<br>11.2 |
| Addition 1 | |
| Ingredients | Parts by Weight (grams) |
| VAZO-67<br>Methyl ethyl ketone | 25.0<br>16.5 |
| Addition 2 | |
| Ingredients | Parts by Weight (grams) |
| Styrene | 545.6 |

The reaction was run in essentially the same manner as described in Example 1 except that a four-hour hold was used instead of a two-hour hold.

Analysis: Viscosity was 20 centipoises. Milliequivalents of acid was .084 and milliequivalents of base was .045.

## Example 5

This example further illustrates the acrylic latex of this invention.

| Initial Charge | |
|---|---|
| Ingredients | Parts by Weight (grams) |
| DI water<br>Acrylic surfactant of Example A<br>Phosphated epoxy of Example B<br>Triton N-101 | 40.8<br>1241.7<br>311.8<br>2.0 |
| Addition 1 | |
| Ingredients | Parts by Weight (grams) |
| VAZO-67<br>Methyl ethyl ketone | 5.0<br>5.0 |
| Addition 2 | |
| Ingredients | Parts by Weight (grams) |
| Styrene | 101.0 |

The reaction was run in essentially the same manner as described in Example 1 except that a four-hour hold was used instead of a two-hour hold.

Analysis: Viscosity was 1140 centipoises. Milliequivalents of acid was .631 and milliequivalents of base was .274. The particle size was 1400 angstroms.

## Claims

1. In an improved latex copolymer which is prepared by comprising a free radical-initiated addition polymerization of ethylenically unsaturated monomers, in water in the presence of a surfactant, the improvement comprising the surfactant in an effective amount to provide a water-dispersed phase of the monomers, said surfactant which contains:

(i) a base-neutralized phosphated epoxy polymer, and

(ii) a base-neutralized acid functional acrylic polymer.

2. The latex copolymer of claim 1 wherein the weight percent ratio of (i) plus (ii) is about 10 to 90 percent based on the total weight of (i) and (ii) plus monomer content of the dispersed phase.

3. The latex copolymer of claim 2 wherein the weight percent is about 40 total.

4. The latex composition of claim 1 wherein the weight percent of the phosphated epoxy polymer based on the weight of (i) plus (ii) is about 30 to 70.

5. The latex polymer of claim 4 wherein the weight percent is from about 45 to 60.

6. The latex copolymer of claim 1 wherein the Tg of the copolymer is from about 45° C to 150° C.

7. The latex of claim 6 wherein the Tg of the polymer is from about 80° C to 100° C.

8. The latex of claim 1 wherein at least one of the ethylenically unsaturated monomer is styrene or methyl methacrylate.

9. The latex of claim 1 wherein at least one of the ethylenically unsaturated monomer is an epoxy functional monomer.

10. An improved process for making a high Tg latex polymer with improved flow and adhesion, comprising free radical-initiated addition polymerization of ethylenically unsaturated monomers in the presence of a surfactant, the improvement comprising-the surfactant in an effective amount to produce a water-dispersed phase of the monomers; said surfactant which contains:

(i) a base-neutralized phosphatized epoxy polymer and

(ii) a base-neutralized acid functional acrylic polymer

11. A coating composition comprising the latex copolymer of claim 1.

12. An electrocoating composition comprising the latex of claim 1 which further comprises an ionic group.

13. An article of matter which is prepared by applying to a metallic substrate the coating composition of claim 10.